# EUROPÄISCHE PATENTSCHRIFT

(11) **EP 3 324 710 B1**
(45) Veröffentlichungstag und Bekanntmachung des Hinweises auf die Patenterteilung: **27.12.2023**
(21) Anmeldenummer: 17201587.7
(22) Anmeldetag: 14.11.2017
(51) Int. Cl.: B60Q 1/00, H05B 47/17, H05B 47/19, B60Q 11/00, B60Q 1/04

(54) **VERFAHREN ZUM BETREIBEN EINER BELEUCHTUNGSEINRICHTUNG UND BELEUCHTUNGSEINRICHTUNG**
METHOD FOR OPERATING A LIGHTING DEVICE AND LIGHTING DEVICE
PROCÉDÉ DE FONCTIONNEMENT D'UN DISPOSITIF D'ÉCLAIRAGE ET DISPOSITIF D'ÉCLAIRAGE

(30) Priorität: 21.11.2016 DE 102016122341
(43) Veröffentlichungstag der Anmeldung: 23.05.2018
(73) Patentinhaber: Marelli Automotive Lighting Reutlingen (Germany) GmbH, 72762 Reutlingen (DE)
(72) Erfinder: Rauskolb, Dietmar, 72762 Reutlingen (DE); Criscito, Roberto, 71139 Ehningen (DE)
(74) Vertreter: DREISS Patentanwälte PartG mbB

(56) Entgegenhaltungen:
- DE-A1-102014 221 666
- KR-B1- 101 621 876
- US-A1- 2016 023 588

## Beschreibung

Die Erfindung betrifft ein Verfahren zum Betreiben einer Beleuchtungseinrichtung nach dem Oberbegriff des Anspruchs 1 sowie eine Beleuchtungseinrichtung nach einem nebengeordneten Anspruch.

Die US2016/0023588 A1 offenbart ein ferngesteuertes Fahrzeugbeleuchtungssystem, wobei das System umfasst: Mindestens eine Fahrzeugleuchte, wobei jede der mindestens einen Fahrzeugleuchte eine Funkeinheit und einen Mikroprozessor umfasst; eine Steuerung, wobei die Steuerung konfiguriert ist, um ein Steuersignal zu erzeugen.

Es ist bekannt, dass Kraftfahrzeugscheinwerfer zunehmend komplexere Lichtfunktionen realisieren. Beispielsweise können mittels adaptiven Fernlichts einzelne Ausschnitte des Sichtfeldes des Fahrers durch eine bereichsweise Erhöhung der Lichtstärke hervorgehoben werden. Andererseits kann zur Vermeidung der Blendung des Gegenverkehrs die Lichtstärke in anderen Ausschnitten reduziert werden.

Zur Realisierung dieser Lichtfunktionen ist es nötig, dass der Beleuchtungseinrichtung ein entsprechendes Kontrollsignal zugeführt wird. Mit der Komplexität der Lichtfunktion skaliert ebenso die Komplexität des Kontrollsignals, was sich unmittelbar auf die Komplexität des der Beleuchtungseinrichtung zugeführten Kabelbaums auswirkt. Ein zugehöriges Steckverbindersystem zwischen Kabelbaum und Beleuchtungseinrichtung muss die erhöhte Anzahl von Signalleitungen abbilden.

Gleichzeitig bestehen gesetzliche Anforderungen an die Abstrahllichtverteilung, die auch bei einem Ausfall von Teilsystemen der Beleuchtungseinrichtung oder des Kraftfahrzeugs erfüllt werden müssen.

Mithin besteht die Aufgabe der Erfindung darin, zum einen den im Kraftfahrzeug vorhandenen Kabelbaum zu reduzieren und gleichzeitig die funktionale Sicherheit im Rahmen der gesetzlichen Anforderungen zu erfüllen.

Die der Erfindung zugrunde liegende Aufgabe wird durch ein Verfahren zum Betreiben einer Beleuchtungseinrichtung nach dem Anspruch 1 sowie durch eine Beleuchtungseinrichtung nach einem nebengeordneten Anspruch gelöst.

Eine Lichtquelleneinheit wird in einem Normalbetrieb in Abhängigkeit von einem drahtlos empfangenen Kontrollsignal betrieben. Ein Wegfall des drahtlos empfangenen Kontrollsignals wird ermittelt. Die Lichtquelleneinheit wird in einem Sicherheitsbetrieb in Abhängigkeit von einem drahtlos empfangenen Sensorsignal betrieben. Die zur Übermittlung des Kontrollsignals und des Sensorsignals sonst nötigen Signalleitungen können damit entfallen, was sich positiv auf den Kabelbaum und damit positiv auf das Gesamtgewicht des Kraftfahrzeugs auswirkt. Des Weiteren kann durch den Sicherheitsbetrieb die Verfügbarkeit der Lichtfunktion erhöht werden.

In einer vorteilhaften Ausführungsform wird im Normalbetrieb eine Fehlfunktion der Beleuchtungseinrichtung ermittelt. Ein Fehlersignal wird in Abhängigkeit von der Ermittlung der Fehlfunktion drahtlos versendet. In Reaktion auf das Versenden des Fehlersignals wird ein weiteres Kontrollsignal für einen weiteren Sicherheitsbetrieb der Lichtquelleneinheit drahtlos empfangen. Die Lichtquelleneinheit wird in Abhängigkeit von dem drahtlos empfangenen weiteren Kontrollsignal in dem weiteren Sicherheitsbetrieb betrieben.

Damit wird ermöglicht, dass der Kommunikationskanal zwischen einer zentralen Steuereinheit und der Beleuchtungseinheit auch im Fehlerfall dazu genutzt wird, um weiterhin in Abhängigkeit von der zentralen Steuereinheit die Beleuchtungseinrichtung zu betreiben. Der Betrieb der Lichtquelleneinheit lediglich in Abhängigkeit von dem Sensorsignal kann somit vorerst vermieden werden.

In einer weiteren vorteilhaften Ausführungsform wird ein Wegfall des Sensorsignals ermittelt. Ein Betriebssignal wird eigenständig für einen zusätzlichen Sicherheitsbetrieb der Lichtquelleneinheit ermittelt. Die Lichtquelleneinheit wird in dem zusätzlichen Sicherheitsbetrieb in Abhängigkeit von dem eigenständig ermittelten Betriebssignal betrieben. Damit wird eine weitere Rückfallebene geschaffen, um bei einem Wegfall des Sensorsignals noch die gesetzlichen Anforderungen an eine Abstrahllichtverteilung zu erfüllen.

Weitere Ausführungsformen und Merkmale sind in der nachfolgenden Beschreibung und in den Figuren der Zeichnung dargestellt. Für äquivalente Merkmale werden auch bei unterschiedlichen Ausführungsformen die gleichen Bezugszeichen verwendet. In der Zeichnung zeigen:
- Figuren 1 und 2: jeweils eine schematisch dargestellte Beleuchtungseinrichtung;
- Figur 3: ein schematisch dargestelltes Kraftfahrzeug;
- Figur 4: ein schematisches Blockdiagramm zum Betreiben der Beleuchtungseinrichtung;
- Figur 5: ein schematisches Ablaufdiagramm zum Betrieb der Beleuchtungseinrichtung; und
- Figuren 6, 7, 8 und 9: jeweils schematisch dargestellte Sequenzdiagramme.

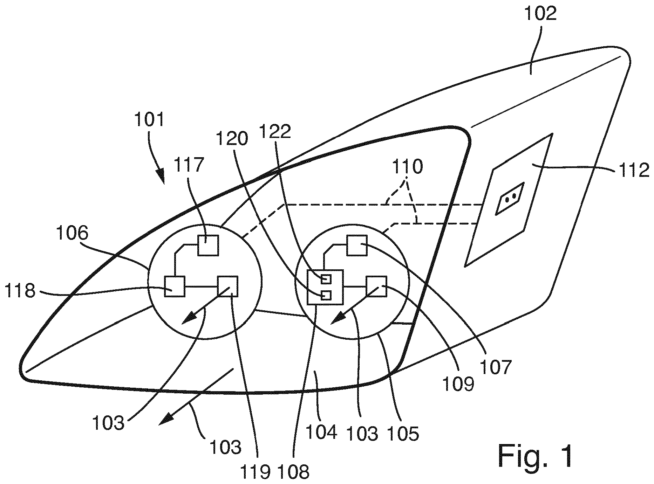

Figur 1 zeigt eine schematisch dargestellte Beleuchtungseinrichtung 101, insbesondere einen Scheinwerfer, für ein Kraftfahrzeug mit einem Gehäuse 102, welches in eine Hauptabstrahlrichtung 103 mit einer im Wesentlichen transparenten Abdeckscheibe 104 verschlossen ist. Selbstverständlich kann es sich anstatt um den dargestellten Scheinwerfer auch um eine andere Beleuchtungseinrichtung handeln, beispielsweise eine Rückleuchte, ein Blinker oder ähnliches.

Innerhalb des Scheinwerfergehäuses 102 befinden sich Lichtmodule 105 und 106. Das Lichtmodul 105 umfasst eine Drahtlosschnittstelle 107 zum drahtlosen Empfang von Signalen. Drahtlos empfangenen Signale werden einer Steuereinheit 108 zugeführt, welche in Abhängigkeit von den drahtlos empfangenen Signalen eine Lichtquelleneinheit 109 betreibt. Ebenso ist es möglich, dass die Steuereinheit 108 mittels der Drahtlosschnittstelle 107 Signale drahtlos versendet. Das Lichtmodul 106 ist analog zum Lichtmodul 105 aufgebaut und umfasst eine Drahtlosschnittstelle 117, eine Steuereinheit 118 sowie eine Leuchteinheit 119. Die Lichtmodule 105 und 106 können dieselbe oder unterschiedliche Lichtfunktionen realisieren. Beispielsweise wird mittels des ersten Lichtmoduls 105 eine Abblendlichtverteilung erzeugt und mittels des Lichtmoduls 106 eine Fernlichtverteilung.

Versorgungsleitungen 110 für die Lichtmodule 105,106 sind an einen Steckverbinder 112 geführt. Der Steckverbinder 112 stellt beispielhaft lediglich 2 Kontaktstellen zur Verfügung soweit alle Signale über die Drahtlosschnittstellen 107 und 117 mit dem Kraftfahrzeug bzw. einer zugeordneten Steuereinheit bzw. einer zugeordneten zentralen Sensoreinheit ausgetauscht werden.

Die Steuereinheit 108 umfasst ein digitales Rechengerät 120, beispielsweise einen Mikrocontroller, und ein Speichermedium 122. Die hier beschriebenen Verfahren können als Computerprogramm für das digitale Rechengerät 120 ausgebildet sein, um auf dem Rechengerät 120 ausgeführt zu werden. Das Computerprogramm ist auf dem Speichermedium 122 abgespeichert.

Alternativ zu der Ausbildung als Mikrocontroller mit zugeordneten Speichermedium 122 kann die Steuereinheit 108 auch als Treiberstufe, d.h. als elektronische Schaltung, ausgebildet sein. Hierbei kann die Drahtlosschnittstelle 107 derart ausgebildet sein, als dass die hier dargestellten Verfahren durchführbar sind. In diesem Fall übernimmt die Drahtlosschnittstelle 107 teilweise die Funktionalität der beschriebenen Steuereinheit 108.

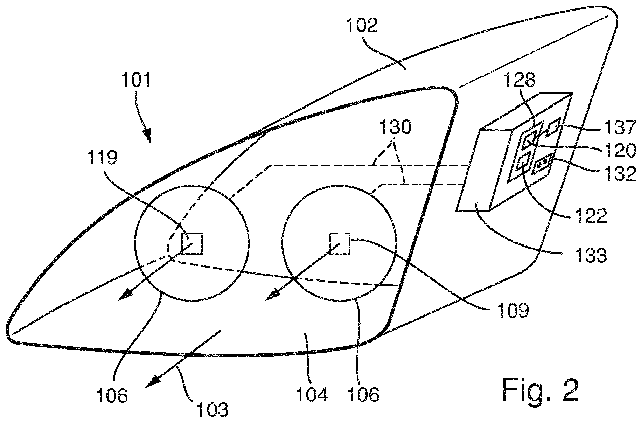

Figur 2 zeigt eine alternative Ausführungsform der Beleuchtungseinrichtung 101. Im Unterschied zu Figur 1 umfasst die Beleuchtungseinrichtung 101 in der Figur 2 eine gemeinsame Steuereinheit 128, welche über Steuer- und Versorgungsleitungen 130 die Lichtmodule 105 und 106 mit den entsprechenden Lichtquelleneinheiten 109 und 119 betreibt. Die Steuereinheit 128 ist in einem Gehäuse 133 untergebracht, welches einen Steckverbinder 132 zur Versorgung der Steuereinheit 128 und der Lichtmodul 105, 106 mit elektrischer Energie sowie eine Drahtlosschnittstelle 137 umfasst.

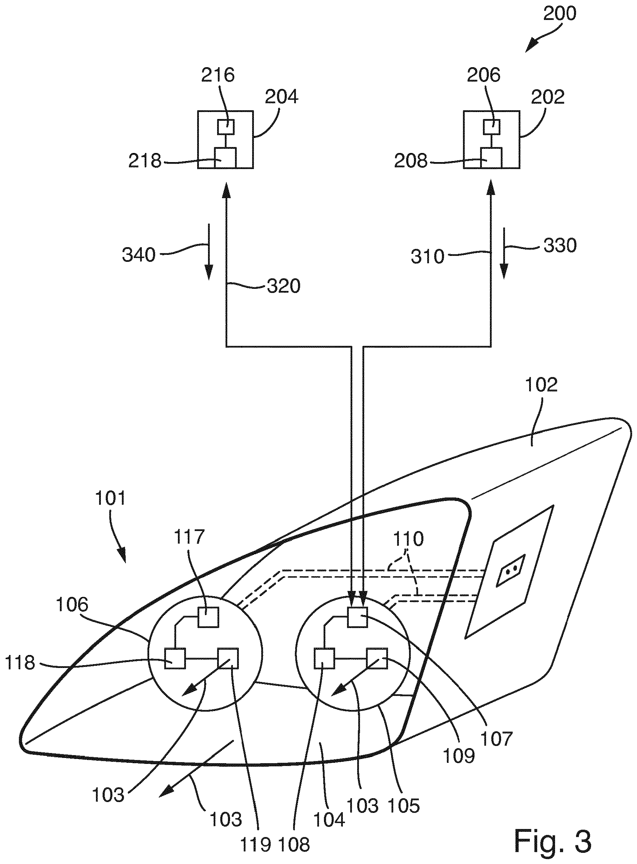

Figur 3 zeigt schematisch ein Kraftfahrzeug 200 mit der Beleuchtungseinrichtung 101. Eine zentrale Steuereinheit 202 ist im Kraftfahrzeug 200 entfernt von der Beleuchtungseinrichtung 101 angeordnet. Eine Sensoreinheit 204 ist im Kraftfahrzeug 200 entfernt von der Beleuchtungseinrichtung 101 und entfernt von der zentralen Steuereinheit 202 angeordnet.

Die zentrale Steuereinheit 202 umfasst eine Recheneinheit 206, welche eine Drahtlosschnittstelle 208 betreibt. Über die Drahtlosschnittstelle 208 und die Drahtlosschnittstelle 107 kann ein drahtloser Kommunikationskanal 310 aufgebaut werden, um Signale zwischen der Steuereinheit 202 und der Steuereinheit 108 drahtlos auszutauschen. Über den Kommunikationskanal 310 wird ein Kontrollsignal 330 von der zentralen Steuereinheit 202 an die Steuereinheit 108 übertragen.

Die Sensoreinheit 204 umfasst ein Sensorelement 216, welches eine Drahtlosschnittstelle 218 anspricht. Über die Drahtlosschnittstelle 218 kann ein drahtloser Kommunikationskanal 320 aufgebaut werden, um Signale zwischen der Sensoreinheit 204 und der Steuereinheit 108 auszutauschen. Über den Kommunikationskanal 320 wird ein Sensorsignal 340 von der Sensoreinheit 204 an die Steuereinheit 108 übertragen.

Dass in Figur 3 dargestellte Prinzip zur Herstellung drahtloser Kommunikationskanäle 310 und 320 ist selbstverständlich auch auf das Lichtmodul 106 aus der Figur 3 sowie auf die drahtlos Schnittstelle 137 aus der Figur 2 übertragbar.

Für die Drahtlosschnittstellen 107, 208 und 218 können verschiedene Technologien zum Einsatz kommen. Beispielsweise können die Drahtlosschnittstellen 107, 28 und 218 gemäß IEEE 802.11 (Wireless Local Area Network) ausgebildet sein. Alternativ können die Drahtlosschnittstellen 107, 108 und 218 auch im Rahmen einer Nahfeldkommunikation durch Kapazität und/oder induktive Kopplung Signale untereinander austauschen.

Darüber hinaus ist es auch möglich, dass anstatt einer einzigen Drahtlosschnittstelle 107 auf Seiten der Beleuchtungsrichtung 101 mehrere drahtlos Schnittstellen vorhanden sind, welche darüber hinaus auch unterschiedliche, oben genannte Kommunikationstechnologien verwenden können, um die Kommunikationskanäle 310 und 320 herzustellen.

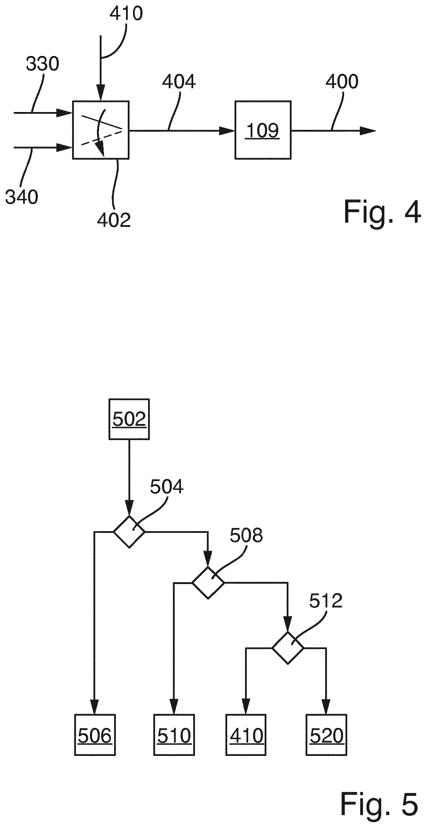

Figur 4 zeigt ein schematisches Blockdiagramm zum Betreiben der Beleuchtungseinrichtung 101. In einem Normalbetrieb wird die Lichtquelleneinheit 109 in Abhängigkeit von dem drahtlos empfangenen Kontrollsignal 330 betrieben und strahlt eine Abstrahllichtverteilung 400 ab. Fällt das drahtlos empfangene Kontrollsignal 330 weg, ist es also nicht mehr verfügbar, so wird in einen Sicherheitsbetrieb 410 gewechselt. In dem Sicherheitsbetrieb 410 wird die Lichtquelleneinheit 109 in Abhängigkeit von dem drahtlos empfangenen Sensorsignal 340 betrieben, was eine Veränderung der Abstrahllichtverteilung 400 bewirken kann. Tritt also der Sicherheitsbetrieb 410 ein, so wird in einem Block 402 das Sensorsignal 340 ausgewählt, um ein Betriebssignal 404 zu ermitteln und der Lichtquelleneinheit 109 zur Verfügung zu stellen.

Figur 5 zeigt ein schematisches Ablaufdiagramm zum Betrieb der Beleuchtungseinrichtung 101. In einem Schritt 502 wird die Beleuchtungseinrichtung 101 eingeschaltet. In einem Schritt 504 findet ein Funktionstest statt, bei dem Funktionstests des Lichtmoduls 105 bzw. der Steuereinheit 108 bzw. der Drahtlosschnittstelle 107 durchgeführt werden. Enden alle Funktionstests mit einem positiven Ergebnis, so wird das Lichtmodul 105 bzw. die Beleuchtungseinrichtung 101 in einem Normalbetrieb 506 gestartet. In dem Normalbetrieb 506 wird die Lichtquelleneinheit 109 in Abhängigkeit von dem drahtlos empfangenen Kontrollsignal 330 betrieben.

Wird zumindest ein Funktionstest mit einem negativen Ergebnis abgeschlossen, so wird in einem Schritt 508 überprüft, ob das Kontrollsignal 330 der Steuereinheit 108 vorliegt. Ist dies der Fall, so wird über den Kommunikationskanal 310 in Abhängigkeit von der Ermittlung der Fehlfunktion ein Fehlersignal an die zentrale Steuereinheit 202 versendet. In Reaktion auf das Versenden des Fehlersignals wird ein weiteres Kontrollsignal 330 für einen ersten Sicherheitsbetrieb 510 empfangen. In dem Sicherheitsbetrieb 510 wird die Lichtquelleneinheit 109 in Abhängigkeit von dem drahtlos empfangenen weiteren Kontrollsignal betrieben.

Wird in Schritt 508 jedoch festgestellt, dass kein Kontrollsignal 330 ausgehend von der zentralen Steuereinheit 202 vorliegt, so wird in einem Schritt 512 überprüft, ob in der Steuereinheit 108 das Sensorsignal 340 vorliegt. Ist dies der Fall, wird in den zweiten Sicherheitsbetrieb 410 gewechselt und die Lichtquelleneinheit 109 wird in Abhängigkeit von dem drahtlos empfangenen Sensorsignal 340 betrieben.

Wird in dem Schritt 512 jedoch festgestellt, dass kein Sensorsignal 340 vorliegt, so wird in einen dritten Sicherheitsbetrieb 520 gewechselt, in welchem ein Betriebssignal eigenständig von der Steuereinheit 108 ermittelt wird. Die Lichtquelleneinheit 109 wird in dem dritten Sicherheitsbetrieb 520 in Abhängigkeit von dem eigenständig ermittelten Betriebssignal betrieben.

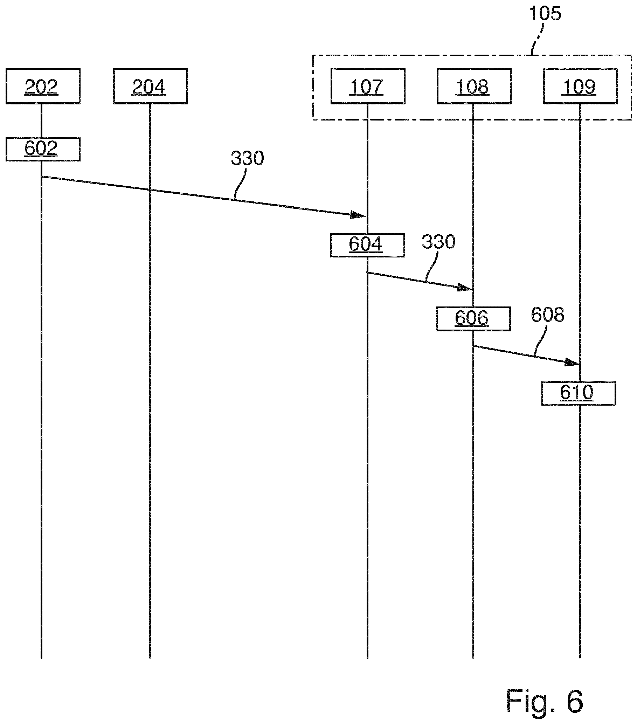

Figur 6 zeigt ein schematisches Sequenzdiagramm für den Normalbetrieb der Beleuchtungseinrichtung 101. Vorliegend wird beispielhaft auf die Ausführungsform nach der Figur 1 Bezug genommen, bei der die Drahtlosschnittstelle 107, die Steuereinheit 108 und die Lichtquelleneinheit 109 auf dem gemeinsamen Lichtmodul 105 angeordnet sind. Selbstverständlich sind auch andere Ausführungen denkbar, beispielsweise gemäß der Figur 2.

In einem Schritt 602 ermittelt die zentrale Steuereinheit 202 das Kontrollsignal 330, welches über den Kommunikationskanal 310 an die Drahtlosschnittstelle 107 übermittelt wird. Die Drahtlosschnittstelle 107 empfängt in einem Schritt 604 das Kontrollsignal 330 und übermittelt das Kontrollsignal 330 oder eine daraus abgeleitete Größe eine Steuereinheit 108. Die Steuereinheit 108 ermittelt in einem Schritt 606 ein Betriebssignal 608, welches an die Lichtquelleneinheit 109 übermittelt wird. In Abhängigkeit von dem Betriebssignal 608 wird in einem Schritt 610 die Lichtquelleneinheit 109 zu einer Lichterzeugung betrieben.

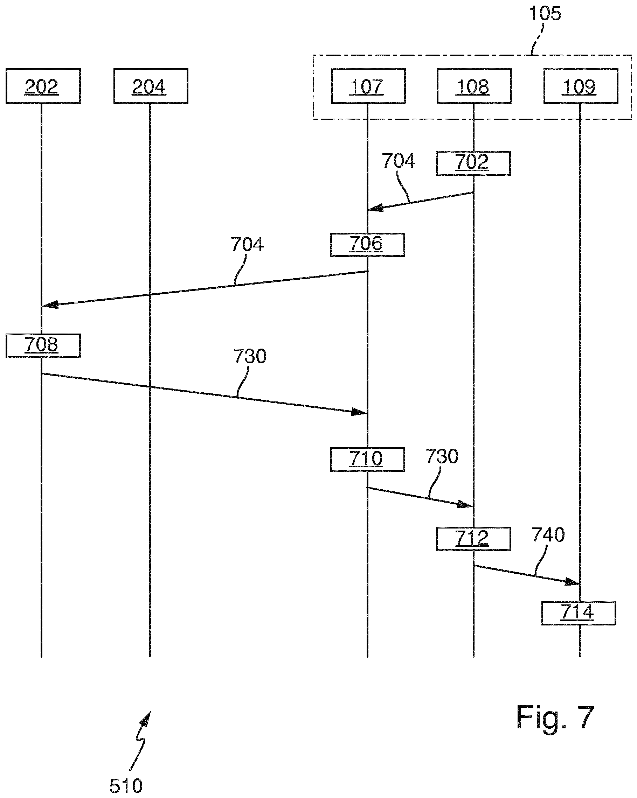

Figur 7 zeigt ein schematisches Sequenzdiagramm für den ersten Sicherheitsbetrieb 510. In einem Schritt 702 stellt die Steuereinheit 108 eine Fehlfunktion der Beleuchtungseinrichtung 101 im Rahmen eines Funktionstests fest und ermittelt das Fehlersignal 704. Das Fehlersignal 704 wird an die Drahtlosschnittstelle 107 übermittelt. In einem Schritt 706 wird ein Drahtlosversand des Fehlersignals 704 vorbereitet. Das Fehlersignal 704 wird drahtlos versendet. In einem Schritt 708 ermittelt die zentrale Steuereinheit 202 in Reaktion auf das empfangene Fehlersignal 704 ein weiteres Kontrollsignal 730, welches von der zentralen Steuereinheit 202 ausgehend drahtlos versendet wird. Die Drahtlosschnittstelle 107 empfängt drahtlos das weitere Kontrollsignal 730 in einem Schritt 710 und stellt das weitere Kontrollsignal 730 der Steuereinheit 108 bereit. In einem Schritt 712 ermittelt die Steuereinheit 108 ein Betriebssignal 740. Die Lichtquelleneinheit 109 wird in einem Schritt 714 in Abhängigkeit von dem ermittelten Betriebssignal 740 betrieben.

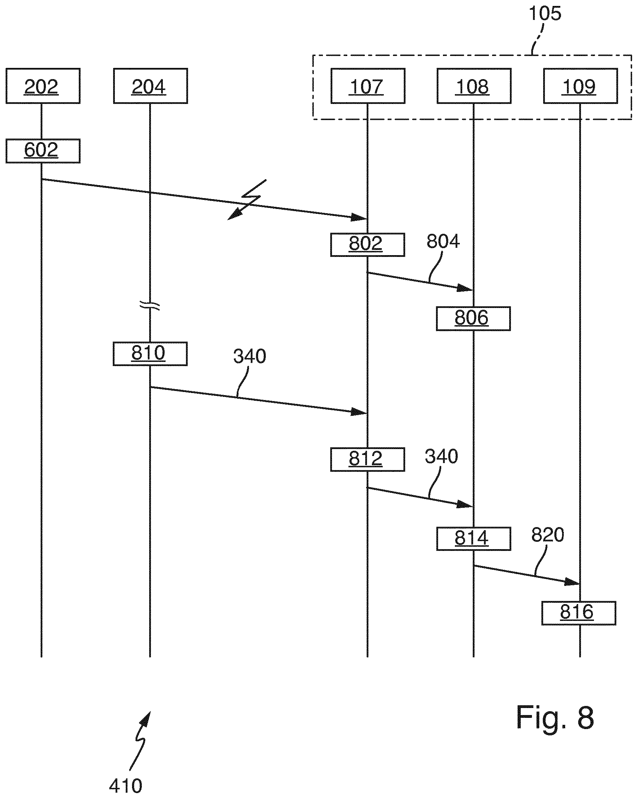

Figur 8 zeigt ein schematisches Sequenzdiagramm für den zweiten Sicherheitsbetrieb 410. Zu dem zweiten Sicherheitsbetrieb 410 kommt es beispielsweise dadurch, dass die zentrale Steuereinheit 202 in dem Schritt 602 zwar das Kontrollsignal 330 ermittelt, welches jedoch durch eine Störung des Kommunikationskanals 310 nicht über die Drahtlosschnittstelle 107 empfangen wird. Die Drahtlosschnittstelle 107 ermittelt in einem Schritt 802 ein Ausbleiben des Kontrollsignals 330 in Form eines Signals 804. In einem Schritt 806 ermittelt die Steuereinheit 108 den zweiten Sicherheitsbetrieb 410 in Abhängigkeit von dem Signal 804.

In dem Sicherheitsbetrieb 410 kann die Steuereinheit 108 über die Drahtlosschnittstelle 107 die Sensoreinheit 204 zum Senden des Sensorsignals 340 aktivieren. In einer anderen Ausführungsform sendet die Sensoreinheit 204 ständig das Sensorsignal 340. Ebenso ist es möglich dass die zentrale Steuereinheit 202 bei einem Wegfall des Kommunikationskanals 310 über einen weiteren drahtgebundenen oder drahtlosen Kommunikationskanal die Sensoreinheit 204 zum drahtlosen Aussenden des Sensorsignals 340 aktiviert.

Die Sensoreinheit 204 ermittelt in einem Schritt 810 das Sensorsignal 340, welches drahtlos in einem Schritt 812 von der Drahtlosschnittstelle 107 empfangen wird. Das Sensorsignal 340 wird von der Drahtlosschnittstelle 107 der Steuereinheit 108 übermittelt. Die Steuereinheit 108 ermittelt in einem Schritt 814 ein Betriebssignal 820 für die Lichtquelleneinheit 109 in Abhängigkeit von den Sensorsignal 340. Die Lichtquelleneinheit 109 wird in Abhängigkeit von den Betriebssignal 820 in einem Schritt 816 betrieben.

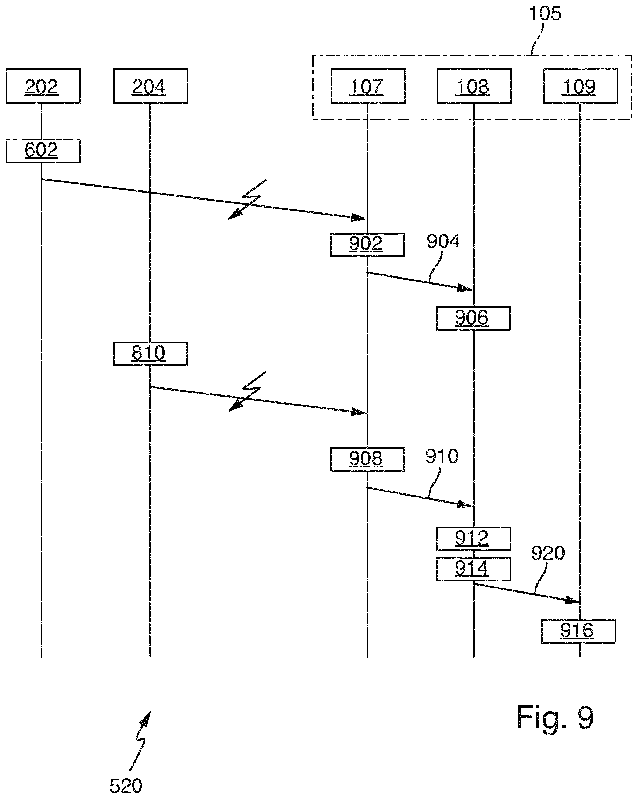

Figur 9 zeigt in einem schematischen Sequenzdiagramm den dritten Sicherheitsbetrieb 520. Voraussetzung für den dritten Sicherheitsbetrieb 520 ist, dass ein drahtloser Empfang des Kontrollsignal als 330 und ein Empfang des Sensorsignals 340 ausbleiben. Dies kann beispielsweise durch eine Störung der beiden Kommunikationskanäle 310 und 320 verursacht sein. In einem Schritt 902 stellt die Drahtlosschnittstelle 107 ein Ausbleiben des Empfangs des Kontrollsignals 330 fest und ermittelt ein Signal 904. In einem Schritt 906 stellt die Steuereinheit 108 das Ausbleiben des Kontrollsignal als 330 fest. In einem Schritt 908 stellt die Drahtlosschnittstelle 107 das Ausbleiben des Sensorsignals 340 fest und ermittelt ein Signal 910. In einem Schritt 912 stellt die Steuereinheit 108 das Ausbleiben des Sensorsignals 340 fest.

Werden also weder das Kontrollsignal 330 noch das Sensorsignal 340 empfangen, so ermittelt die Steuereinheit 108 selbstständig in einem Schritt 914 ein Betriebssignal 920 zum Betrieb der Lichtquelleneinheit 109. In einem Schritt 916 wird die Lichtquelleneinheit 109 in Abhängigkeit von den Betriebssignal 920 betrieben.

Mit den vorgestellten Verfahren und abgestuften Sicherheitsbetrieben 510, 410 und 520 ist es möglich die gesetzlichen Sicherheitsanforderungen auch unter Zuhilfenahme von Drahtlosschnittstellen und drahtlosen Kommunikationskanälen sicherzustellen. Lediglich beispielhaft wird das vorgestellte Verfahren im Rahmen der Lichtfunktion Abblendlicht beschrieben.

In dem Normalbetrieb wird das Abblendlicht mittels der Lichtquelleneinheit 109 in Abhängigkeit von den drahtlos empfangenen Kontrollsignal 330 eingestellt. Hierzu greift die zentrale Steuereinheit 202 beispielsweise auf ein Sensorsignal ausgehend von der Sensoreinheit 204 zurück. Die Einstellung der Hell-Dunkel-Grenze kann elektronisch durch Ein- bzw. Ausschalten einzelner Lichtquellen oder mechanisch mittels eines Elektromotors erfolgen.

Stellt die Steuereinheit 108 bzw. die Steuereinheit 128 eine Fehlfunktion fest, welche das Lichtmodul 105 betrifft, so wird in den ersten Sicherheitsbetrieb gewechselt, soweit der Kommunikationskanal 310 funktionsfähig ist. Gegenüber dem Normalbetrieb 506 wird nunmehr das weitere Kontrollsignal 730 dahingehend ermittelt, als dass eine Blendung des Gegenverkehrs gewährleistet bleibt. Die Hell-Dunkel-Grenze wird somit im ersten Sicherheitsbetrieb gegenüber der Hell-Dunkel-Grenze im Normalbetrieb abgesenkt.

In dem zweiten Sicherheitsbetrieb 410 wird festgestellt, dass von der zentralen Steuereinheit 202 keines der Kontrollsignale 330, 730 empfangen wird. In diesem Fall stellt die Sensoreinheit 204 einen Achssensor dar, welcher eine Einfederung im Sinne des Sensorsignals 340 drahtlos an die Beleuchtungseinrichtung 101 übermittelt. In Abhängigkeit von der Einfederung ermittelt die Steuereinheit 108 das Betriebssignal 820, um somit unabhängig von der zentralen Steuereinheit 202 die Hell-Dunkel-Grenze der abgestrahlten Abblendlichtverteilung einzustellen.

Fällt nun auch das Sensorsignal 340 weg, so wird der dritte Sicherheitsbetrieb 520 aktiviert und die Lichtquelleneinheit 109 wird in Abhängigkeit von dem Betriebssignal 920 betrieben. Das Betriebssignal 920 sorgt dafür, dass die Hell-Dunkel-Grenze nach unten geblendet, d.h. so weit wie möglich abgesenkt wird.

Selbstverständlich sind neben der Abblendlichtfunktion weitere Beispiele denkbar, um die jeweiligen Sicherheitsbetrieb durchzuführen. Beispielhaft sei auf blendfreies bzw. adaptives Fernlicht verwiesen. Hierbei wird in zumindest einem Teilbereich der abgestrahlten Lichtverteilung die Lichtstärke erhöht bzw. reduziert. Dies geschieht in Abhängigkeit von einem zugeführten Kontrollsignal 330 und im Rahmen des Sicherheitsbetriebs 410 in Abhängigkeit von einem Sensorsignal 340.

## Patentansprüche

1. Ein Verfahren zum Betreiben einer Beleuchtungseinrichtung (101) eines Kraftfahrzeugs (200) mit einer Lichtquelleneinheit (109; 119) zur Erzeugung einer Abstrahllichtverteilung (400), wobei
- die Lichtquelleneinheit (109; 119) in einem Normalbetrieb (506) in Abhängigkeit von einem drahtlos empfangenen Kontrollsignal (330) betrieben wird,
- ein Wegfall des drahtlos empfangenen Kontrollsignals (330) ermittelt wird,
- in einen Sicherheitsbetrieb (410) gewechselt wird, wenn das drahtlos empfangene Kontrollsignal (330) wegfällt, wobei das Verfahren **dadurch gekennzeichnet ist, dass**
- die Lichtquelleneinheit (109; 119) in dem Sicherheitsbetrieb (410) in Abhängigkeit von einem drahtlos empfangenen Sensorsignal (340) betrieben wird,
- eine zentrale Steuereinheit (202) mittels einer Drahtlosschnittstelle (208) im Normalbetrieb (506) das Kontrollsignal (330) drahtlos versendet,
- eine Sensoreinheit (204) mittels einer Drahtlosschnittstelle (218) das Sensorsignal (340) drahtlos versendet, und wobei
- die Sensoreinheit (204) ein Achssensor ist, der eine Einfederung im Sinne des Sensorsignals (340) drahtlos an die Beleuchtungseinrichtung (101) übermittelt.

2. Das Verfahren nach dem Anspruch 1,
- wobei im Normalbetrieb (506) eine Fehlfunktion der Beleuchtungseinrichtung (101) ermittelt wird,
- wobei ein Fehlersignal (704) in Abhängigkeit von der Ermittlung der Fehlfunktion drahtlos versendet wird, und
- wobei in Reaktion auf das Versenden des Fehlersignals (704) ein weiteres Kontrollsignal (730) für einen weiteren Sicherheitsbetrieb (510) der Lichtquelleneinheit (109; 119) drahtlos empfangen wird, und
- wobei die Lichtquelleneinheit (109; 119) in Abhängigkeit von dem drahtlos empfangenen weiteren Kontrollsignal (730) in dem weiteren Sicherheitsbetrieb (510) betrieben wird.

3. Das Verfahren nach dem Anspruch 1 oder 2,
- wobei ein Wegfall des Sensorsignals (340) ermittelt wird,
- wobei eigenständig ein Betriebssignal (920) für einen zusätzlichen Sicherheitsbetrieb (520) der Lichtquelleneinheit (109; 119) ermittelt wird, und
- wobei die Lichtquelleneinheit (109; 119) in dem zusätzlichen Sicherheitsbetrieb (520) in Abhängigkeit von dem eigenständig ermittelten Betriebssignal (920) betrieben wird.

4. Ein Speichermedium und eine Steuereinheit (108; 118; 128) zum Betrieb einer Beleuchtungseinrichtung (101) eines Kraftfahrzeugs (200), das mit einem digitalen Rechengerät (120) versehen ist, auf dem ein Computerprogramm lauffähig ist, das dazu ausgebildet ist, das Verfahren nach einem der vorstehenden Ansprüche auszuführen, wobei auf dem Speichermedium das Computerprogram abgespeichert ist, wobei drahtlos empfangenen Signale der Steuereinheit (108) zugeführt werden, die in Abhängigkeit von den drahtlos empfangenen Signalen die Lichtquelleneinheit (109) betreibt.

5. Ein Kraftfahrzeug (200) umfassend:
- eine Beleuchtungseinrichtung (101),
- eine zentrale Steuereinheit (202), welche mittels einer Drahtlosschnittstelle (208) ein Kontrollsignal (330) drahtlos versendet;
- eine Sensoreinheit (204), welche mittels einer Drahtlosschnittstelle (218) ein Sensorsignal (340) drahtlos versendet, wobei die Sensoreinheit (204) ein Achssensor ist, der eine Einfederung im Sinne des Sensorsignals (340) drahtlos an die Beleuchtungseinrichtung (101) übermittelt, die eine Lichtquelleneinheit (109; 119) zur Erzeugung einer Abstrahllichtverteilung (400) aufweist, und die dazu ausgebildet ist,
- die Lichtquelleneinheit (109; 119) in einem Normalbetrieb (509) in Abhängigkeit von dem drahtlos empfangenen Kontrollsignal (330) zu betreiben,
- ein Wegfall des drahtlos empfangenen Kontrollsignals (330) zu ermitteln,
- in einen Sicherheitsbetrieb (410) zu wechseln, wenn das drahtlos empfangene Kontrollsignal (330) wegfällt, und
- die Lichtquelleneinheit (109; 119) in dem Sicherheitsbetrieb (410) in Abhängigkeit von dem drahtlos empfangenen Sensorsignal (320) zu betreiben.

6. Das Kraftfahrzeug (101) nach dem vorstehenden Anspruch, welche zur Ausführung des Verfahrens nach Anspruch 2 oder 3 ausgebildet ist.

## Claims

1. Method for operating a lighting device (101) of a motor vehicle (200) having a light source unit (109; 119) for generating an emission light distribution (400),
- the light source unit (109; 119) being operated in a normal mode (506) on the basis of a wirelessly received control signal (330),
- a loss of the wirelessly received control signal (330) being determined,
- the unit being switched into a safety mode (410) if the wirelessly received control signal (330) is lost, the method being **characterized in that**
- the light source unit (109; 119) is operated in the safety mode (410) on the basis of a wirelessly received sensor signal (340),
- a central control unit (202) sends the control signal (330) wirelessly by means of a wireless interface (208) in the normal mode (506),
- a sensor unit (204) sends the sensor signal (340) wirelessly by means of a wireless interface (218), and
- the sensor unit (204) being an axle sensor which transmits a deflection in accordance with the sensor signal (340) wirelessly to the lighting device (101).

2. Method according to claim 1,
- wherein a malfunction of the lighting device (101) is determined in the normal mode (506),
- wherein an error signal (704) is sent wirelessly on the basis of the determination of the malfunction, and
- wherein, in response to the error signal (704) being sent, a further control signal (730) is received wirelessly for a further safety mode (510) of the light source unit (109; 119), and
- wherein the light source unit (109; 119) is operated in the further safety mode (510) on the basis of the wirelessly received further control signal (730).

3. Method according to claim 1 or claim 2,
- wherein a loss of the sensor signal (340) is determined,
- wherein independently an operating signal (920) is determined for an additional safety mode (520) of the light source unit (109; 119), and
- wherein the light source unit (109; 119) is operated in the additional safety mode (520) on the basis of the independently determined operating signal (920).

4. Storage medium and control unit (108; 118;128) for operating a lighting device (101) of a motor vehicle (200), which is provided with a digital computing device (120) on which a computer program can be run, which is designed to carry out the method according to any of the preceding claims, wherein the computer program is stored on the storage medium, wherein wirelessly received signals are supplied to the control unit (108) which operates the light source unit (109) on the basis of the wirelessly received signals.

5. Motor vehicle (200) comprising:
- a lighting device (101),
- a central control unit (202) which sends a control signal (330) wirelessly by means of a wireless interface (208);
- a sensor unit (204) which sends a sensor signal (340) wirelessly by means of a wireless interface (218), wherein the sensor unit (204) is an axle sensor which transmits a deflection in accordance with the sensor signal (340) wirelessly to the lighting device (101), which has a light source unit (109; 119) for generating an emission light distribution (400), and which is designed to
- operate the light source unit (109; 119) in a normal mode (509) on the basis of the wirelessly received control signal (330),
- determine the loss of the wirelessly received control signal (330),
- switch into a safety mode (410) if the wirelessly received control signal (330) is lost, and
- operate the light source unit (109; 119) in the safety mode (410) on the basis of the wirelessly received sensor signal (320).

6. Motor vehicle (101) according to the preceding claim, which is designed to carry out the method according to claim 2 or claim 3.

## Revendications

1. Procédé destiné à faire fonctionner un dispositif d'éclairage (101) d'un véhicule automobile (200) avec une unité de source de lumière (109; 119) pour générer une répartition de lumière émise (400), dans lequel
- on fait fonctionner l'unité de source de lumière (109; 119) en fonctionnement normal (506) en fonction d'un signal de contrôle (330) reçu sans fil,
- on détermine une disparition du signal de contrôle (330) reçu sans fil,
- on passe à un mode de sécurité (410) lorsque le signal de contrôle (330) reçu sans fil disparaît, dans lequel le procédé est **caractérisé par le fait que**
- on fait fonctionner l'unité de source de lumière (109; 119) en mode de sécurité (410) en fonction d'un signal de capteur (340) reçu sans fil,
- une unité centrale de commande (202) envoie le signal de contrôle (330), en fonctionnement normal (506), sans fil au moyen d'une interface sans fil (208),
- une unité de capteur (204) envoie le signal de capteur (340) sans fil au moyen d'une interface sans fil (218), et dans lequel
- l'unité de capteur (204) est un capteur d'essieu qui transmet sans fil une compression dans le sens du signal de capteur (340) au dispositif d'éclairage (101) .

2. Procédé selon la revendication 1,
- dans lequel un dysfonctionnement du dispositif d'éclairage (101) est déterminé en fonctionnement normal (506),
- dans lequel un signal d'erreur (704) est envoyé sans fil en fonction de la détermination du dysfonctionnement, et
- dans lequel, en réponse à l'envoi du signal d'erreur (704), un autre signal de contrôle (730) pour un autre mode de sécurité (510) de l'unité de source de lumière (109; 119) est reçu sans fil, et
- dans lequel on fait fonctionner l'unité de source de lumière (109; 119) dans ledit autre mode de sécurité (510) en fonction de l'autre signal de contrôle (730) reçu sans fil.

3. Procédé selon la revendication 1 ou 2,
- dans lequel une disparition du signal de capteur (340) est déterminée,
- dans lequel un signal de fonctionnement (920) pour un mode de sécurité supplémentaire (520) de l'unité de source de lumière (109; 119) est déterminé indépendamment, et
- dans lequel on fait fonctionner l'unité de source de lumière (109; 119) en mode de sécurité supplémentaire (520) en fonction du signal de fonctionnement (920) déterminé indépendamment.

4. Support de stockage et unité de commande (108; 118; 128) pour faire fonctionner un dispositif d'éclairage (101) d'un véhicule automobile (200) qui est pourvu d'un dispositif informatique numérique (120) sur lequel un programme informatique peut être exécuté qui est conçu pour mettre en œuvre le procédé selon l'une quelconque des revendications précédentes, dans lequel le programme informatique est stocké sur le support de stockage, dans lequel des signaux reçus sans fil sont transmis à l'unité de commande (108) qui fait fonctionner l'unité de source de lumière (109) en fonction des signaux reçus sans fil.

5. Véhicule automobile (200) comprenant:
- un dispositif d'éclairage (101),
- une unité centrale de commande (202) qui envoie un signal de contrôle (330) sans fil au moyen d'une interface sans fil (208),
- une unité de capteur (204) qui envoie un signal de capteur (340) sans fil au moyen d'une interface sans fil (218), dans lequel l'unité de capteur (204) est un capteur d'essieu qui transmet sans fil une compression dans le sens du signal de capteur (340) au dispositif d'éclairage (101) qui comprend une unité de source de lumière (109; 119) pour générer une répartition de lumière émise (400) et qui est conçu pour
- faire fonctionner l'unité de source de lumière (109; 119) en fonctionnement normal (506) en fonction du signal de contrôle (330) reçu sans fil,
- déterminer une disparition du signal de contrôle (330) reçu sans fil,
- passer à un mode de sécurité (410) lorsque le signal de contrôle (330) reçu sans fil disparaît, et
- faire fonctionner l'unité de source de lumière (109; 119) en mode de sécurité (410) en fonction du signal de capteur (320) reçu sans fil.

6. Véhicule automobile (101) selon la revendication précédente, conçu pour mettre en œuvre le procédé selon la revendication 2 ou 3.
